# EUROPEAN PATENT APPLICATION

(11) **EP 3 985 065 A1**
(43) Date of publication of application: **20.04.2022**
(21) Application number: 21202125.7
(22) Date of filing: 12.10.2021
(51) Int. Cl.: C08L 23/12

(54) **PROPYLENE RESIN COMPOSITION WITH EXCELLENT MELT FLOWABILITY AND IMPACT RESISTANCE**

(30) Priority: 13.10.2020 KR 20200131535; 27.09.2021 KR 20210126857
(71) Applicant: Hanwha Total Petrochemical Co., Ltd., Seosan-si, Chungcheongnam-do 31900 (KR)
(72) Inventor: PARK, Daeho, 31900 Chungcheongnam-do (KR); CHUN, YongSung, 31900 Chungcheongnam-do (KR); JUNG, Hyeyoung, 31900 Chungcheongnam-do (KR); KIM, SungHyun, 31900 Chungcheongnam-do (KR)
(74) Representative: dompatent von Kreisler Selting Werner - Partnerschaft von Patent- und Rechtsanwälten mbB

(57) **Abstract**

The present invention relates to a polypropylene resin composition and to an article molded therefrom. The polypropylene resin composition according to the embodiment of the present invention is excellent in melt flowability and impact resistance. Thus, the polypropylene resin article according to the embodiment of the present invention can be advantageously used as interior and exterior parts for automobiles, parts for electronic and electrical products, construction and industrial supplies, and the like.

## Description

### Technical Field

The present invention relates to a polypropylene resin composition and to an article molded therefrom. Specifically, the present invention relates to a polypropylene resin composition having excellent melt flowability and impact resistance and to a polypropylene resin article prepared from the polypropylene resin composition and having excellent impact resistance.

### Background Art of the Invention

A polypropylene resin, which is one of the general-purpose resins, is not only economical but also excellent in mechanical properties, moldability, and chemical resistance. Thus, it is widely used as a material for films, pipes, interior and exterior parts for automobiles, parts for electronic and household appliances, construction and industrial supplies, and the like.

A propylene-ethylene block copolymer resin among them has advantages in that it is excellent in rigidity, chemical resistance, and molding processability and is inexpensive. Thus, it has been applied for various purposes through injection, extrusion, and the like. In particular, propylene-ethylene block copolymers and composite resin compositions using the same are widely applied in the fields that require very high impact resistance for safety such as interior and exterior parts for automobiles and car seats for children.

Meanwhile, attempts have been made to add a polyolefin elastomer (POE) component to a composite resin composition for use in applications requiring high impact resistance. In such a case, there is a problem in that the production cost is increased due to the blending of POE. Thus, a reactor-made thermoplastic olefin (RTPO), which is a high-impact polypropylene resin in which the impact resistance of a propylene-ethylene block copolymer itself is improved, has been developed.

RTPO is a resin obtained by polymerizing a large amount of a propylene-ethylene rubber copolymer (i.e., solvent extractable), a rubber component, in the polymerization step of a propylene-ethylene block copolymer without the mechanical blending of a rubber component like POE. Since RTPO is produced without the mechanical blending of an expensive POE component, its production cost is low. As it has an Izod impact strength of 50 kgf·cm/cm or more when measured at room temperature (23°C), it has very excellent impact resistance to the extent that the Izod specimen does not completely break even upon an impact test, showing a non-breakable (NB) feature.

Although a high melt index is usually required in order to carry out injection molding of large-sized articles such as bumpers and instrument panels for automobiles, typical RTPO resins having impact resistance at room temperature satisfying the NB feature generally have a melt index of 20 g/10 minutes or less. Meanwhile, if an RTPO resin has a melt index higher than the above value, the Izod impact strength at room temperature would be lower than 50 kgf·cm/cm, failing to satisfy the NB feature.

### Disclosure of the Invention

### Technical Problem to be Solved

Accordingly, an object of the present invention is to provide a polypropylene resin composition having excellent melt flowability and impact resistance.

Another object of the present invention is to provide an article prepared from the polypropylene resin composition.

### Solution to the Problem

According to an embodiment of the present invention for achieving the object, there is provided a polypropylene resin composition, which comprises an ethylene-propylene block copolymer resin, wherein the ethylene-propylene block copolymer resin comprises a propylene homopolymer component and an ethylene-propylene rubber copolymer component as a solvent extract, the content of the ethylene-propylene rubber copolymer component in the ethylene-propylene block copolymer resin is 25 to 40% by weight, the ratio of the content of ethylene to the content of solvent extract in the ethylene-propylene block copolymer resin based on percent by weight is 0.25 to 0.45, and the ethylene-propylene block copolymer resin has a melt index of 20 to 45 g/10 minutes when measured at 230°C under a load of 2.16 kg.

In a specific embodiment of the present invention, the ethylene-propylene rubber copolymer component in the ethylene-propylene block copolymer resin may have an intrinsic viscosity of 1.5 to 7 dl/g.

In a specific embodiment of the present invention, the ethylene-propylene block copolymer resin may be one in which the propylene homopolymer component and the ethylene-propylene rubber copolymer component are polymerized in series in reactors.

In a specific embodiment of the present invention, the polypropylene resin composition may further comprise an inorganic filler in an amount of 50% by weight or less based on the total weight of the composition.

Here, the inorganic filler may comprise at least one selected from the group consisting of talc, mica, calcium carbonate, wollastonite, barium sulfate, clay, magnesium sulfate, and whisker. Preferably, the inorganic filler may be talc.

In a specific embodiment of the present invention, the polypropylene resin composition may further comprise an ethylene-α-olefin rubber in an amount of 50% by weight or less based on the total weight of the composition.

Here, the ethylene-α-olefin rubber may comprise at least one selected from the group consisting of an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber.

The polypropylene resin composition according to an embodiment of the present invention may further comprise at least one additive selected from the group consisting of an antioxidant, a neutralizer, an anti-blocking agent, a reinforcement, a filler, a weathering stabilizer, an antistatic agent, a lubricant, a slip agent, a nucleating agent, a flame retardant, a pigment, and a dye.

In a specific embodiment of the present invention, the polypropylene resin composition may comprise at least one antioxidant selected from the group consisting of tetrakis(methylene(3,5-di-t-butyl-4-hydroxy)hydrosilylnate), 1,3,5-trimethyl-tris(3,5-di-t-butyl-4-hydroxybenzyl)benzene, and tris(2,4-di-t-butylphenyl)phosphite in an amount of 0.05 to 0.2 part by weight based on 100 parts by weight of the composition.

In a specific embodiment of the present invention, the polypropylene resin composition may comprise at least one neutralizer selected from the group consisting of hydrotalcite and calcium stearate in an amount of 0.01 to 0.2 part by weight based on 100 parts by weight of the composition.

According to another embodiment of the present invention, there is provided a polypropylene resin article molded from the polypropylene resin composition.

In a specific embodiment of the present invention, the polypropylene resin article may have an Izod impact strength of 50 kgf·cm/cm or more with a non-breakable (NB) feature when measured at room temperature (23°C) and a flexural modulus of 8,000 kgf/cm² or more.

In a specific embodiment of the present invention, the polypropylene resin article may be selected from the group consisting of interior and exterior parts for automobiles, parts for electronic and electrical products, and construction and industrial supplies.

### Advantageous Effects of the Invention

The polypropylene resin composition according to the embodiment of the present invention is excellent in melt flowability and impact resistance. Thus, the polypropylene resin article according to the embodiment of the present invention can be advantageously used as interior and exterior parts for automobiles, parts for electronic and electrical products, construction and industrial supplies, and the like.

### Detailed Description for Carrying out the Invention

Hereinafter, the present invention will be described in more detail.

The polypropylene resin composition according to an embodiment of the present invention comprises an ethylene-propylene block copolymer resin. Here, the ethylene-propylene block copolymer resin comprises a propylene homopolymer component and an ethylene-propylene rubber copolymer component. Specifically, the ethylene-propylene block copolymer resin may have a form in which the ethylene-propylene rubber copolymer component is dispersed in a matrix of the propylene homopolymer component.

In a specific embodiment of the present invention, the content of the ethylene-propylene rubber copolymer component as a solvent extract (or xylene soluble) in the ethylene-propylene block copolymer resin is 25 to 40% by weight. The content of the ethylene-propylene rubber copolymer component as a solvent extract in the ethylene-propylene block copolymer resin may be measured by a method in which the ethylene-propylene block copolymer resin is dissolved in xylene at a concentration of 1% by weight at 140°C for 1 hour, which is left at room temperature for 2 hours, and the weight of the extract is then measured. If the content of the solvent extract is less than 25% by weight, the Izod impact strength of the resin composition at room temperature may not reach 50 kgf·cm/cm. On the other hand, if the content exceeds 40% by weight, there is a risk that the flexural modulus of the resin composition is lowered while the impact resistance is not further improved.

In a specific embodiment of the present invention, the ratio of the content of ethylene to the content of solvent extract in the ethylene-propylene block copolymer resin based on percent by weight is 0.25 to 0.45. The content of ethylene in the ethylene-propylene block copolymer resin can be measured from the characteristic peaks of 720 cm⁻¹ and 730 cm⁻¹ using an infrared absorption spectrum. If the ratio of the content of ethylene (% by weight) to the content of solvent extract (% by weight) in the ethylene-propylene block copolymer resin is less than 0.25, the glass transition temperature of the ethylene-propylene rubber copolymer component in the ethylene-propylene block copolymer resin would be high, so that the resin composition may not function properly as an impact modifier. On the other hand, if this ratio exceeds 0.45, the ethylene-propylene rubber copolymer component would not be uniformly dispersed in the ethylene-propylene block copolymer resin, so that the Izod impact strength of the resin composition at room temperature may be reduced.

In a specific embodiment of the present invention, the ethylene-propylene block copolymer resin has a melt index of 20 to 45 g/10 minutes when measured at 230°C under a load of 2.16 kg. Preferably, the melt index of the ethylene-propylene block copolymer resin may be 20 to 40 g/10 minutes, 25 to 35 g/10 minutes, or 25 to 30 g/10 minutes. If the melt index is less than 20 g/10 minutes, the flowability of the resin composition during injection molding would be lowered. When a large-sized article is injection-molded, therefore, the resin composition may not completely fill the mold cavity, resulting in molding defects. On the other hand, if the melt index exceeds 45 g/10 minutes, the Izod impact strength at room temperature may not reach 50 kgf·cm/cm.

In a specific embodiment of the present invention, the ethylene-propylene rubber copolymer component in the ethylene-propylene block copolymer resin may have an intrinsic viscosity of 1.5 to 7 dl/g. If the intrinsic viscosity of the ethylene-propylene rubber copolymer component is less than 1.5 dl/g, the impact resistance of the resin composition may be deteriorated. If the intrinsic viscosity exceeds 7 dl/g, the rubber component would not be well dispersed during injection molding of the resin composition, so that there is a risk that appearance defects due to gels may occur on the surface of an injection-molded article.

There is no particular limitation to the method of preparing the ethylene-propylene block copolymer according to an embodiment of the present invention. Any method of preparing an ethylene-propylene block copolymer known in the art to which the present invention pertains may be used as it is or as appropriately modified.

In a specific embodiment of the present invention, the ethylene-propylene block copolymer may be prepared by a process, which comprises a first polymerization step of polymerizing a propylene homopolymer in two or more consecutive reactors; and a second polymerization step of copolymerizing an ethylene-propylene rubber copolymer component by supplying ethylene and propylene in the presence of the polymerized propylene homopolymer to obtain an ethylene-propylene block copolymer resin.

In such an event, each polymerization may adopt a conventional method and reaction conditions known in the art, such as a slurry polymerization method, a bulk polymerization method, a solution polymerization method, a gas phase polymerization method, and the like.

In a specific embodiment of the present invention, each polymerization step in the above preparation process may be carried out in the presence of a Ziegler-Natta or metallocene catalyst. In order to maximize the balance between rigidity and impact resistance of the resin composition, it is preferable to use a catalyst capable of increasing the tacticity.

In a specific embodiment of the present invention, the Ziegler-Natta catalyst may be one known in the art without any limitations. Specifically, it may be synthesized by supporting at least one titanium chloride selected from TiCl₃ and TiCl₄ on a magnesium chloride (MgCl₂) carrier. It is preferable to use a cocatalyst and an external electron donor together with the catalyst.

As the cocatalyst, an alkyl aluminum compound may be used. Examples of the alkyl aluminum compound included triethyl aluminum, diethylchloro aluminum, tributyl aluminum, trisisobutyl aluminum, and trioctyl aluminum, but it is not limited thereto.

In addition, as the external electron donor, an organosilane compound is preferable. Examples of the organosilane compound include diphenyldimethoxysilane, phenyltrimethoxysilane, phenylethyldimethoxysilane, phenylmethyldimethoxysilane, methoxytrimethylsilane, isobutyltrimethoxysilane, diisobutyldimethoxysilane, diisopropyldimethoxysilane, di-t-butyldimethoxysilane, dicyclopentyldimethoxysilane, cyclohexylmethyldimethoxysilane, and dicyclohexyldimethoxysilane, but it is not limited thereto.

In a specific embodiment of the present invention, in the preparation process according to an embodiment of the present invention, the first polymerization step and the second polymerization step may be carried out in the same polymerization reactor or different polymerization reactors.

Preferably, the first polymerization step is a step of polymerizing a propylene homopolymer in the presence of a Ziegler-Natta catalyst in two or more bulk or slurry polymerization reactors, and the second polymerization step is a step of copolymerizing an ethylene-propylene rubber copolymer component by supplying ethylene and propylene in the presence of the polymerized propylene homopolymer and a Ziegler-Natta catalyst in a gas-phase polymerization reactor to obtain the ethylene-propylene block copolymer resin.

In such an event, each reactor may be operated such that the melt index of the propylene homopolymer polymerized in each of the two or more bulk or slurry polymerization reactors gradually decreases. Alternatively, each reactor may be operated such that the melt index of the propylene homopolymer polymerized in each reactor is the same. The melt index of the polymer produced in each polymerization reactor may be adjusted by the amount of hydrogen fed to each polymerization reactor.

Subsequently, the propylene homopolymer obtained in the first polymerization step is transferred to a gas-phase reactor in which the ethylene-propylene copolymerization is to be carried out, and ethylene and propylene are simultaneously added thereto. Thus, the propylene homopolymer in a solid state is continuously copolymerized with the newly added ethylene and propylene as an ethylene-propylene rubber copolymer component, thereby producing an ethylene-propylene block copolymer. In such an event, the content ratio of ethylene and propylene to be injected may be adjusted to control the ratio of the content of ethylene to the content of solvent extract in the ethylene-propylene block copolymer thus obtained.

Thus, in a specific embodiment of the present invention, the ethylene-propylene block copolymer resin may be one in which the propylene homopolymer component and the ethylene-propylene rubber copolymer component are polymerized in series in reactors.

The polypropylene resin composition according to an embodiment of the present invention may further comprise an inorganic filler in an amount of 50% by weight or less based on the total weight of the composition. If the polypropylene resin composition comprises an inorganic filler, the rigidity of a molded article may be improved. But if the content of the inorganic filler exceeds 50% by weight, the physical properties such as impact resistance of a molded article may be deteriorated.

In a specific embodiment of the present invention, the inorganic filler may comprise at least one selected from the group consisting of talc, mica, calcium carbonate, wollastonite, barium sulfate, clay, magnesium sulfate, and whisker, but it is not particularly limited thereto. Preferably, the inorganic filler may be talc.

The polypropylene resin composition according to an embodiment of the present invention may further comprise an ethylene-α-olefin rubber in an amount of 50% by weight or less based on the total weight of the composition. If the polypropylene resin composition comprises an ethylene-α-olefin rubber, the impact resistance of a molded article may be improved. But if the content of the ethylene-α-olefin rubber exceeds 50% by weight, the physical properties such as rigidity of the molded article may be deteriorated.

In a specific embodiment of the present invention, the ethylene-α-olefin rubber may comprise at least one selected from the group consisting of an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber, but it is not particularly limited thereto.

The polypropylene resin composition according to an embodiment of the present invention may further comprise conventional additives within a range that does not depart from the scope of the present invention. For example, the polypropylene resin composition may comprise an antioxidant, a neutralizer, an anti-blocking agent, a reinforcement, a filler, a weathering stabilizer, an antistatic agent, a lubricant, a slip agent, a nucleating agent, a flame retardant, a pigment, and a dye, but it is not limited thereto.

In a specific embodiment of the present invention, the polypropylene resin composition may further comprise an antioxidant to increase the thermal stability thereof. In such an event, the antioxidant may be added in an amount of 0.05 to 0.2 part by weight, preferably 0.05 to 0.1 part by weight, relative to 100 parts by weight of the polypropylene resin composition. If the content of the antioxidant is less than 0.05 part by weight, it is difficult to secure thermal stability. Meanwhile, if the content of the antioxidant exceeds 0.2 part by weight, the thermal stability would not be further improved, and the economic efficiency of the product may be reduced, which is not preferable.

The antioxidant may be a phenolic antioxidant, a phosphite antioxidant, or the like. Specifically, it may comprise at least one antioxidant selected from the group consisting of tetrakis(methylene(3,5-di-t-butyl-4-hydroxy)hydrosilylnate), 1,3,5-trimethyl-tris(3,5-di-t-butyl-4-hydroxybenzyl)benzene, and tris(2,4-di-t-butylphenyl)phosphite, but it is not limited thereto.

In a specific embodiment of the present invention, the polypropylene resin composition may further comprise a neutralizer to remove catalyst residues. In such an event, the neutralizer may be added in an amount of 0.01 to 0.2 part by weight, preferably 0.05 to 0.1 part by weight, relative to 100 parts by weight of the polypropylene resin composition. If the content of the neutralizer is less than 0.01 part by weight, it is difficult to secure the effect of removing catalyst residues. Meanwhile, if the content of the neutralizer exceeds 0.2 part by weight, the effect of removing catalyst residues would not be further increased, and the economic efficiency of the resin composition may be reduced, which is not preferable.

The neutralizer may comprise at least one selected from the group consisting of hydrotalcite and calcium stearate, but it is not limited thereto.

There is no particular limitation to the method of preparing the polypropylene resin composition according to an embodiment of the present invention. Any method of preparing a polypropylene resin composition known in the art to which the present invention pertains may be used as it is or as appropriately modified. The resin components and compounds described above may be selected and mixed according to a desired order without any particular limitations thereto.

As a specific example, the resins and additives described above in predetermined amounts are blended for 1 to 2 hours in a blender such as a Henschel mixer, a kneader, a roll, and a Banbury mixer. They are then melted and compounded in a single- or twin-screw extruder at a temperature of 160 to 230°C, thereby preparing a polypropylene resin composition in the form of pellets.

According to another embodiment of the present invention, there is provided a polypropylene resin article molded from the polypropylene resin composition.

There is no particular limitation to the method for preparing a molded article from the polypropylene resin composition according to an embodiment of the present invention. Any method known in the technical field of the present invention may be used. For example, the polypropylene resin composition according to an embodiment of the present invention may be molded by a conventional method such as injection molding, extrusion molding, casting molding, or the like to prepare a polypropylene resin article.

In a specific embodiment of the present invention, the polypropylene resin article may have an Izod impact strength of 50 kgf·cm/cm or more with a non-breakable (NB) feature when measured at room temperature (23°C). Preferably, the polypropylene resin article may have an Izod impact strength of 60 kgf·cm/cm or more with a non-breakable (NB) feature when measured at room temperature (23°C).

In a specific embodiment of the present invention, the polypropylene resin composition may have a flexural modulus of 8,000 kgf/cm² or more. Preferably, the polypropylene resin article may have a flexural modulus of 8,500 kgf/cm² or more.

In a preferred specific embodiment of the present invention, the polypropylene resin article may have an Izod impact strength of 50 kgf·cm/cm or more with a non-breakable (NB) feature when measured at room temperature (23°C) and a flexural modulus of 8,000 kgf/cm² or more.

Since the polypropylene resin article according to the embodiment of the present invention is excellent in rigidity and impact resistance, it can be advantageously used as interior and exterior parts for automobiles, parts for electronic and electrical products, construction and industrial supplies, and the like.

### Example

Hereinafter, the present invention is explained in detail by the following examples. However, the following examples are intended to further illustrate the present invention. The scope of the present invention is not limited thereto only.

### Preparation of a polypropylene resin composition

A Ziegler-Natta catalyst was obtained by supporting titanium chloride (TiCl₄) on a magnesium chloride (MgCl₂) carrier, followed by the addition of dicyclopentyldimethoxysilane as an external electron donor and triethyl aluminum as a cocatalyst for the activation of the catalyst.

Mitsui's Hypol process, in which two slurry reactors and two gas-phase reactors are connected in series for continuous polymerization, was used for the polymerization of an ethylene-propylene block copolymer. Here, the operating temperatures and pressures of the first- to three-stage reactors were in the range of 60 to 80°C and 15 to 40 bars, respectively. The operating temperatures and pressures of the fourth-stage reactor were in the range of 67 to 72°C and 8 to 12 bars.

A propylene homopolymer was prepared by supplying propylene in the presence of the above Ziegler-Natta catalyst in the first- to third-stage reactors. Subsequently, the propylene homopolymer thus produced was transferred to the fourth-stage reactor, and an ethylene-propylene block copolymer was prepared by supplying ethylene and propylene to carry out gas-phase polymerization in the presence of the Ziegler-Natta catalyst. In such an event, the melt index of the polymer produced in each polymerization reactor was adjusted by the amount of hydrogen fed to each polymerization reactor.

Added to the prepared ethylene-propylene block copolymer were Iganox 1010 as a phenolic antioxidant, Iganox 168 as a phosphate antioxidant, and calcium stearate as a catalyst neutralizer in an amount of 500 ppm, respectively. The mixture was processed in a twin-screw kneading extruder (SM Platek TEK-30, L/D: 36, screw diameter: 30 mm) to prepare a polypropylene resin composition. Thereafter, it was processed using an injection machine of Woojin (SELEX-TE 150, 150 tons, screw diameter: 36 mm) to prepare ASTM No. 4 injection specimens and spiral flow specimens.

### Test Example

The polypropylene resin compositions and the specimens prepared therefrom in the Examples and Comparative Examples were each tested by the following methods.

### (1) Melt index

It was measured at 230°C under a load of 2.16 kg in accordance with ASTM D1238.

### (2) Content of ethylene in an ethylene-propylene block copolymer

The content of ethylene was measured from the characteristic peaks of 720 cm⁻¹ and 730 cm⁻¹ using infrared absorption spectrum (FT-IR) according to ASTM D3900.

### (3) Ethylene-propylene rubber copolymer component (i.e., solvent extract)

According to ASTM D5492, an ethylene-propylene block copolymer resin was dissolved in xylene at a concentration of 1% by weight at 140°C for 1 hour and left at room temperature for 2 hours. The weight of the extract was then measured.

### (4) Intrinsic viscosity of an ethylene-propylene rubber copolymer component

The intrinsic viscosity of the ethylene-propylene rubber copolymer component obtained in Section (3) above was measured according to ASTM D1601.

### (5) Flexural modulus

It was measured at 23°C in accordance with ASTM D770.

### (6) Izod impact strength

The Izod impact strength was measured with a notched specimen having a thickness of 3.2 mm at 23°C according to ASTM D256.

### (7) Spiral flow length

The in-house spiral flow mold was used for injection molding under the same injection molding conditions to measure flow lengths for comparison thereof.

### (8) Gels (appearance defects)

A sheet-like specimen having a thickness of 2 mm was injection-molded, and it was visually observed to check whether or not appearance defects occurred due to gels on the exterior.

**[Table 1]**

| | | Unit | Ex. 1 | C. Ex. 1 | C. Ex. 2 | C. Ex. 3 | C. Ex. 4 |
|---|---|---|---|---|---|---|---|
| Polymerization conditions | Degree of prepolymerization | g/g | 10 | 10 | 10 | 10 | 10 |
| | Feed rate of catalyst | g/hr | 0.46 | 0.47 | 0.45 | 0.45 | 0.46 |
| | Temp. (1^{st}-to 4^{th}- stages) | °C | 69/61/76/70 | 69/62/77/69 | 69/62/77/71 | 69/61/77/69 | 69/61/79/69 |
| | Pressure (1^{st}-to 4^{th}- stages) | Bar | 37/30/17/10 | 36/29/17/10 | 37/30/17/11 | 37/30/17/11 | 35/29/17/10 |
| | H₂/olefin (1^{st}-to 4^{th}- stages) | - | 0.067/0.089/0.112 /0.027 | 0.062/0.102/0.06 /0.024 | 0.065 /0.095/0.24 /0.026 | 0.066/0.096/0.135 /0.026 | 0.067/0.091/0.105 /0.026 |
| Physical properties of the resin | Melt index | g/10 min | 29 | 17 | 51 | 28 | 26 |
| | Ethylene content | (% by weight) | 12.2 | 11.9 | 12.7 | 9.6 | 16.4 |
| | Solvent extract content | (% by weight) | 29.0 | 29.0 | 32.6 | 24.3 | 42.0 |
| | Ratio of ethylene content to solvent extract content | - | 0.42 | 0.41 | 0.39 | 0.40 | 0.39 |
| | Intrinsic viscosity of the solvent extract | dl/g | 2.9 | 3.3 | 2.3 | 3.1 | 2.7 |
| Physical properties of the molded article | Flexural modulus | kgf/cm² | 9,200 | 9,400 | 10,200 | 11,900 | 6,800 |
| | Izod impact strength (23°C) | kgf·cm/cm | 61 | 64 | 22 | 16 | 66 |
| | Spiral flow length | cm | 52 | 38 | 68 | 51 | 49 |
| | Gels | - | × | × | × | × | × |

**[Table 2]**

| | | Unit | C. Ex. 5 | C. Ex. 6 | C. Ex. 7 | C. Ex. 8 |
|---|---|---|---|---|---|---|
| Polymerization conditions | Degree of prepolymerization | g/g | 10 | 10 | 10 | 10 |
| | Feed rate of catalyst | g/hr | 0.46 | 0.46 | 0.46 | 0.46 |
| | Temp. (1^{st}- to 4^{th}-stages) | °C | 68/61/75/70 | 69/62 /76/71 | 70/61/76/69 | 69/61/76/70 |
| | Pressure (1^{st}- to 4^{th}-stages) | Bar | 38/29/17/12 | 37/29/17/11 | 38/30/18/10 | 37/30/17/10 |
| | H₂/olefin (1^{st}- to 4^{th}-stages) | - | 0.066 /0.090 /0.125 /0.029 | 0.067/0.087/0.110 /0.028 | 0.068/0.091/0.122 /0.042 | 0.067/0.090/0.118/0.015 |
| Physical properties of the resin | Melt index | g/10 min | 33 | 28 | 36 | 25 |
| | Ethylene content | (% by weight) | 6.4 | 20.6 | 12.9 | 11.4 |
| | Solvent extract content | (% by weight) | 28.9 | 37.4 | 30.2 | 28.6 |
| | Ratio of ethylene content to solvent extract content | - | 0.22 | 0.55 | 0.43 | 0.40 |
| | Intrinsic viscosity of the solvent extract | dl/g | 2.4 | 2.5 | 1.2 | 7.8 |
| Physical properties of the molded article | Flexural modulus | kgf/cm² | 11,400 | 7,500 | 10,800 | 9,900 |
| | Izod impact strength (23°C) | kgf·cm/cm | 18 | 34 | 44 | 57 |
| | Spiral flow length | cm | 53 | 50 | 56 | 47 |
| | Gels | - | × | × | × | o |

As can be seen from Tables 1 and 2, in Example 1 falling within the scope of the present invention, the mechanical properties such as flexural modulus and Izod impact strength at 23°C were excellent.

In contrast, in Comparative Example 1 in which the melt index of the propylene-ethylene block copolymer was low, the spiral flow length was short, indicating poor flowability, while the mechanical properties were excellent. In Comparative Example 2 in which the melt index of the propylene-ethylene block copolymer was high, the Izod impact strength at 23°C was low.

In Comparative Example 3 in which the content of solvent extract in the ethylene-propylene block copolymer was low, the Izod impact strength at 23°C was low. In Comparative Example 4 in which the content of solvent extract in the ethylene-propylene block copolymer was high, the flexural modulus was low.

In Comparative Example 5 in which the ratio of the content of ethylene to the content of solvent extract in the ethylene-propylene block copolymer was low, the Izod impact strength at 23°C was low while the flexural modulus was excellent. In Comparative Example 6 in which the ratio of the content of ethylene to the content of solvent extract in the ethylene-propylene block copolymer was high, both the Izod impact strength at 23°C and flexural modulus were low.

In Comparative Example 7 in which the intrinsic viscosity of solvent extract in the ethylene-propylene block copolymer was low, the Izod impact strength at 23°C was low. In Comparative Example 8 in which the intrinsic viscosity of solvent extract in the ethylene-propylene block copolymer was high, gels were present on the exterior of the molded article due to the non-uniform dispersion of the rubber phase while the mechanical properties were good.

Accordingly, the polypropylene resin composition according to the Examples, which falls within the scope of the present invention, is excellent in moldability since it has high flowability. The article molded from the same is excellent in balance between rigidity and impact resistance. Thus, the molded article according to the embodiment of the present invention can be advantageously used as interior and exterior parts for automobiles, parts for electronic and electrical products, construction and industrial supplies, and the like.

## Claims

1. A polypropylene resin composition, which comprises an ethylene-propylene block copolymer resin, wherein the ethylene-propylene block copolymer resin comprises a propylene homopolymer component and an ethylene-propylene rubber copolymer component as a solvent extract, the content of the ethylene-propylene rubber copolymer component in the ethylene-propylene block copolymer resin is 25 to 40% by weight, the ratio of the content of ethylene to the content of solvent extract in the ethylene-propylene block copolymer resin based on percent by weight is 0.25 to 0.45, and the ethylene-propylene block copolymer resin has a melt index of 20 to 45 g/10 minutes when measured at 230°C under a load of 2.16 kg.

2. The polypropylene resin composition of claim 1, wherein the ethylene-propylene rubber copolymer component in the ethylene-propylene block copolymer resin has an intrinsic viscosity of 1.5 to 7 dl/g.

3. The polypropylene resin composition of claim 1 or 2, wherein the ethylene-propylene block copolymer resin is one in which the propylene homopolymer component and the ethylene-propylene rubber copolymer component are polymerized in series in reactors.

4. The polypropylene resin composition of any one of claims 1 to 3, which further comprises an inorganic filler in an amount of 50% by weight or less based on the total weight of the composition.

5. The polypropylene resin composition of claim 4, wherein the inorganic filler comprises at least one selected from the group consisting of talc, mica, calcium carbonate, wollastonite, barium sulfate, clay, magnesium sulfate, and whisker.

6. The polypropylene resin composition of any one of claims 1 to 5, which further comprises an ethylene-α-olefin rubber in an amount of 50% by weight or less based on the total weight of the composition.

7. The polypropylene resin composition of claim 6, wherein the ethylene-α-olefin rubber comprises at least one selected from the group consisting of an ethylene-1-butene rubber, an ethylene-butylene rubber, an ethylene-1-pentene rubber, an ethylene-1-hexene rubber, ethylene-1-heptene rubber, ethylene-1-octene rubber, and an ethylene-4-methyl-1-pentene rubber.

8. The polypropylene resin composition of any one of claims 1 to 7, which further comprises at least one additive selected from the group consisting of an antioxidant, a neutralizer, an anti-blocking agent, a reinforcement, a filler, a weathering stabilizer, an antistatic agent, a lubricant, a slip agent, a nucleating agent, a flame retardant, a pigment, and a dye.

9. The polypropylene resin composition of claim 8, which comprises at least one antioxidant selected from the group consisting of tetrakis(methylene(3,5-di-t-butyl-4-hydroxy)hydrosilylnate), 1,3,5-trimethyl-tris(3,5-di-t-butyl-4-hydroxybenzyl)benzene, and tris(2,4-di-t-butylphenyl)phosphite in an amount of 0.05 to 0.2 part by weight based on 100 parts by weight of the composition.

10. The polypropylene resin composition of claim 8, which comprises at least one neutralizer selected from the group consisting of hydrotalcite and calcium stearate in an amount of 0.01 to 0.2 part by weight based on 100 parts by weight of the composition.

11. A polypropylene resin article molded from the polypropylene resin composition according to any one of claims 1 to 10.

12. The polypropylene resin article of claim 11, which has an Izod impact strength of 50 kgf·cm/cm or more with a non-breakable (NB) feature when measured at room temperature (23°C) and a flexural modulus of 8,000 kgf/cm² or more.

13. The polypropylene resin article of claim 11 or 12, which is selected from the group consisting of interior and exterior parts for automobiles, parts of electronic and electrical products, and construction and industrial supplies.
